# EUROPÄISCHE PATENTSCHRIFT

(11) **EP 1 341 739 B1**
(45) Veröffentlichungstag und Bekanntmachung des Hinweises auf die Patenterteilung: **09.10.2013**
(21) Anmeldenummer: 01960162.4
(22) Anmeldetag: 03.08.2001
(51) Int. Cl.: C04B 35/565, F24J 2/07, C04B 35/626, C04B 38/06, C04B 38/04

(54) **OFFENZELLIGE SILICIUMCARBID-SCHAUMKERAMIK UND VERFAHREN ZU IHRER HERSTELLUNG**
OPEN-CELLED SILICON CARBIDE FOAM CERAMIC AND METHOD FOR PRODUCTION THEREOF
MOUSSE CERAMIQUE EN CARBURE DE SILICIUM A ALVEOLES OUVERTES ET SON PROCEDE DE PRODUCTION

(30) Priorität: 04.09.2000 DE 10044656
(43) Veröffentlichungstag der Anmeldung: 10.09.2003
(73) Patentinhaber: Fraunhofer-Gesellschaft zur Förderung der angewandten Forschung e.V., 80686 München (DE)
(72) Erfinder: ADLER, Jörg, 01662 Meissen (DE); STANDKE, Gisela, 01099 Dresden (DE)
(74) Vertreter: Rauschenbach, Marion
(86) Internationale Anmeldenummer: PCT/DE2001/003044
(87) Internationale Veröffentlichungsnummer: WO 2002/020426

(56) Entgegenhaltungen:
- K. KOUMOTO ET AL.: "Thermal shoch resistance of porous SiC ceramics" TRANSACTIONS AND JOURNAL OF THE BRITISH CERAMIC SOCIETY, Bd. 90, Nr. 1, 1991, Seiten 32-33, XP002188762 in der Anmeldung erwähnt

## Beschreibung

### Anwendungsgebiet der Erfindung

Die Erfindung bezieht sich auf das Gebiet der Keramik und betrifft offenzellige Siliciumcarbid-Schaumkeramiken, die beispielsweise als hochtemperatur- und thermoschockstabiler Siticiumcarbidschaum z.B. als Volumenbrenner, Dieselrußfilter, Heizelemente oder Solarreceiver eingesetzt werden können und ein Verfahren zu ihrer Herstellung.

### Stand der Technik

Offenzellige Keramikschäume bestehen aus einer dreidimensional vernetzten Keramikstruktur aus vielen miteinander verbundenen Keramikstegen und zwischen den Stegen liegenden offenen Zellen. Die Art der Keramik, aus der die Stege aufgebaut sind, läßt sich variieren und bestimmt wesentliche Eigenschaften des Schaumes. Offenzellige Schaumkeramiken werden hauptsächlich durch Abformungsverfahren hergestellt, bei dem eine offenzellige Gerüststruktur, z.B. aus Polymerschaum oder Kohlenstoffschaum mit Keramik beschichtet wird und das ursprüngliche Substrat entweder während oder nach der Keramikausbildung entfernt wird (US 3 090 094). Siliciumcarbid-Schaum ist deshalb interessant, da diese Keramik dem Schaum besondere Eigenschaften verleihen kann, wie Hochtemperatur- und Korrosionsbeständigkeit, gute Wärmeleitfähigkeit, Härte etc.

Offenzellige keramische Schäume auf der Basis von Siliciumcarbidkeramik dienen hauptsächlich zur Metallschmelzenfiltration, speziell von Grauguß und Buntmetall. Dazu wird eine Schaumkeramik eingesetzt, deren Zellstege aus einer SiliciumcarbidKeramik bestehen, die aus Siliciumcarbidkörnern besteht, die mit einer alumosilikatischen Bindephase gebunden sind. Diese Keramik entsteht durch Mischen von Siliciumcarbid-Pulver mit Ton, und/oder Siliciumdioxid (z.B. in Form von Kieselsol) und Aluminiumoxid (US 4 885 263). Die Sinterung erfolgt unter Luft bei Temperaturen im Bereich von 1100 °C bis 1400 °C. Dabei kommt es zu einer Umhüllung der SiC-Körner mit glasigen oder teilkristallinen alumosilikatischen Verbindungen. Ein Vorteil dieser Keramik ist es, daß während der Sinterung keine oder nur geringe Schwindung auftritt.

Das ist vor allem deshalb wichtig, da der Schaum während der Sinterung einen Zustand aufweist, bei der das stützende Gerüst des Polymerschaumes bereits verbrannt ist, die Keramik aber noch nicht vollständig versintert und damit verfestigt ist. Tritt während dieser Phase noch zusätzliche Schwindung auf, weisen Schaumkeramikformteile, insbesondere großer und komplexer Abmaße, eine starke Neigung zum Reißen oder Zerfallen auf. Nicht- oder nur gering schwindende Keramiken weisen in der Regel eine feine Porosität der Keramik in den Stegen auf. Diese Porosität führt zu einer geringen Festigkeit und schlechten Beständigkeit bei Kontakt mit korrosiven Medien, wenn sie für diese Medien zugänglich ist. Deshalb ist es vorteilhaft, wenn es sich um geschlossene Poren handelt. Dagegen ist diese Feinstporosität vorteilhaft für die Thermoschockbeständigkeit von Keramik (Transactions and Journal of the British Ceramic Society, 90 (1991) 1, 32 ff).

Gesintertes Siliciumcarbid wird hergestellt, indem sehr feine Siliciumcarbidpulver (mittlere Korngröße < 2 µm) mit sehr geringen Mengen an Sinterhilfsmitteln (Bor/Kohlenstoff oder Bor/Aluminium/Kohlenstoff) gemischt werden und diese bei Temperaturen oberhalb von 1800 °C unter Schutzgas oder Vakuum gesintert werden (US 867861). Es ist möglich, eine Schaumkeramik aus diesem gesinterten Siliciumcarbid herzustellen, aber diese Keramik besitzt in den Stegen üblicherweise nur eine Porosität von < 2% und ist demzufolge nicht von hoher Thermoschockbeständigkeit. Bei der Sinterung tritt eine hohe Schwindung von 15 bis 25 % auf, was zu einer Zerstörung der Schaumkeramik beim Sintern aus den o.g. Gründen führt. Die Zugabe von geringen Mengen an Kohlenstoff als Bestandteil des Sinterhilfsmittels dient bei der Sinterung von Siliciumcarbid zur Entfernung des Sauerstoffs auf der Oberfläche der SiC-Pulverteilchen und damit der Sinteraktivierung.

Zunehmend werden aber auch andere Anwendungen für Siliciumcarbid-Schaumkeramiken bedeutsam, bei denen die Keramik noch höheren Beanspruchungen hinsichtlich Hochtemperatur- und Thermoschockbeständigkeit ausgesetzt sind, als das bei der Metallschmelzenfiltration auftritt, z.B. als Volumenbrenner, Dieselrußfilter, Heizelement und Solarreceiver. Dabei versagen die alumosilikatisch gebundenen SiC-Keramiken bei Temperaturen > 1400 °C durch Erweichung und Zersetzungen infolge von Reaktionen zwischen der Bindephase und dem SiC.

In Ceram. Bull. Vol 70, No 6, 1991, 1025-28 ist ein Verfahren angegeben, bei dem durch CVD bzw. CVI-Beschichtung ein offenzelliger Kohlenstoff mit Keramik beschichtet wird, u.a. auch mit reinem SiC. Jedoch ist CVD-SiC-Keramik dicht und besitzt demzufolge eine geringere Thermoschockbeständigkeit. Ein weiterer Nachteil besteht darin, daß das Verfahren sehr aufwendig und teuer und hinsichtlich der Gleichmäßigkeit der Beschichtung insbesondere bei komplex geformten Formteilen begrenzt ist.

Weiterhin ist ein Keramikschaumfilter und ein Verfahren zu seiner Herstellung nach DE 35 40 451 A1 bekannt, der aus einer dreidimensional vernetzten Keramikstruktur besteht, die aus vielen miteinander verbundenen Keramiksträngen und zwischen den Strängen vorliegenden Poren aufgebaut ist, wobei jeder der Stränge eine große Anzahl von feinen Poren aufweist. Dabei beträgt die scheinbare Porosität etwa 20 % und der Porendurchmesser liegt zwischen 20 und 100 µm. Hergestellt wird dieser Keramikschaumfilter durch Vermischen von kleinteiligem Oxidkeramikmaterial mit Wasser und einem Bindemittel und zusätzlich von kleinen Teilchen aus einem Kohlenstoffmaterial. Ein Schaum wird mit dem Schlicker ein- oder mehrmals imprägniert, das Schaummaterial ausgebrannt und die Oxidkeramik bei 1500 °C gesintert. Während des Ausbrennens wird auch das Kohlenstoffmaterial unter Bildung einer großen Anzahl feiner Poren ausgebrannt.

Mit dieser Lösung werden Keramikschaumfilter für das Abfiltrieren von Metallschmelzen hergestellt, die einen verbesserten Füterwirkungsgrad aufweisen. Durch die große Anzahl feiner ununterbrochener bzw. zusammenhängender Poren wird die wirksame Oberfläche der Keramikstränge für die Anlagerung von abzufiltrierendem Material vergrößert. Diese Wirkung wird verstärkt, wenn eine möglichst große Anzahl von relativ großen Poren und/oder vielen kleinen ununterbrochenen/zusammenhängenden Poren im Keramikmaterial erreicht wird.

### Darlegung der Erfindung

Aufgabe der Erfindung ist es, eine offenzellige Siliciumcarbid-Schaumkeramik mit verbesserter Thermoschockbeständigkeit anzugeben, bei der die keramischen Stege möglichst wenig störende Sekundärphasen aufweisen und geschlossene Poren enthalten, und die mit einem einfachen Verfahren herstellbar sind.

Die erfindungsgemäße offenzellige Siliciumcarbidkeramik besteht aus einer dreidimensional vernetzten Keramikstruktur aus vielen miteinander verbundenen Stegen und zwischen den Stegen liegenden offenen Zellen, wobei die Stege im wesentlichen aus gesintertem Siliciumcarbid bestehen mit 5 bis 30 % Porenvolumen, vorzugsweise 5 - 15 % Porenvolumen an ganz oder im wesentlichen ganz geschlossenen Poren mit einem mittleren Porendurchmesser von < 20 µm, vorzugsweise von 1-10 µm.

Erfindungsgemäß hergestellt wird diese offenzellige Siliciumcarbid-Schaumkeramik indem eine Mischung aus grobem (mittlere Korngröße 5 bis 100 µm; bevorzugt 10 bis 50 µm) und feinem Siliciumcarbidpulver (mittlere Korngröße < 2 µm) im Verhältnis von 20:80 bis 80:20 % (bevorzugt 40:60 bis 60:40) und von bekanntermaßen geringen Mengen an Sinteradditiven (Bor/Kohlenstoff oder Bor/Aluminium/Kohlenstoff) hergestellt und aus dieser Pulvermischung eine Suspension hergestellt wird. Mit dieser Suspension wird nach an sich bekannten Verfahren ein offenzelliger Schaum oder ein offenzelliges Netzwerk beschichtet, der Schaum oder das Netzwerk getrocknet, das Schaum- oder Netzwerkmaterial entfernt und der verbleibende Grünkörper bei Temperaturen ≥ 1800 °C unter Schutzgas oder Vakuum gesintert.

Vorteilhafterweise können Polyurethanschäume oder Netzwerke aus organischen synthetischen oder Naturfasern eingesetzt werden.

Diese Schaum- oder Netzwerkmaterialien können durch Verbrennen, Verdampfen, Ätzen, Lösen entfernt werden.

Die Sinterung erfolgt vorteilhafterweise bei Temperaturen im Bereich von 1800 - 2300 °C, noch vorteilhafterweise im Bereich von 2000 - 2150 °C.

Durch die Zugabe des groben Pulvers wird die Schwindung während der Sinterung auf Werte unter 8 % verringert und in den Keramikstegen entsteht eine feine, geschlossene Porosität.

Der mittlere Porendurchmesser und das Porenvolumen werden erfindungsgemäß ermittelt durch licht- oder elektronenmikroskopische bildanalytische Auswerteverfahren an Anschliffen der offenzelligen Siliciumcarbid-Schaumkeramiken.

Ohne den Einsatz von Sekundärphasen wird die Schwindung bei der Sinterung der Siliciumcarbid-Schaumkeramiken so groß, dass ihre Festigkeit nicht mehr für eine Benutzung ausreicht.

Durch die erfindungsgemäße Lösung ist es gelungen, einerseits auf Sekundärphasen zu verzichten und andererseits noch eine genügend feste Siliciumcarbid-Schaumkeramik mit verbesserter Thermoschockbeständigkeit herzustellen, die bei der Sinterung nur in geringem Maße schwindet.

Um eine derartige Schaumkeramik zu erhalten, ist ein eher geringeres Porenvolumen (in Richtung 10 - 5 %) und relativ kleine voneinander unabhängige geschlossene Poren in der Keramik (in Richtung 10 - 1 µm mittlerer Porendurchmesser) besonders von Vorteil.

### Bester Weg zur Ausführung der Erfindung

Im weiteren wird die Erfindung an Ausführungsbeispielen näher erläutert.

### Beispiel 1

Es wird eine keramische Suspension auf Wasserbasis hergestellt. Diese enthält eine bimodale SiC-Kornverteilung, hergestellt durch Mischung von SiC-Pulvern mit einem mittleren Korndurchmesser von 1,2 und 18 µm im Verhältnis von 50:50 %; außerdem 0,6% Bor(carbid) und 9% eines wasserlöslichen Phenolharzes (entspricht 3 % Kohlenstoff nach der Pyrolyse) als Sinteradditiv. Die Suspension wird auf einen Feststoffgehalt von 84% eingestellt.

Zur Herstellung der Schaumkeramik wird ein Polyurethan-Schaumstoff der Zellweite von 10 ppi (pores per inch) mit der Suspension getränkt und anschließend wird die überschüssige Suspension mit einer Zentrifuge abgetrennt. Für eine Probe der Maße 40x40x25 mm ergibt sich ein Beschichtungsgewicht von 20 g. Anschließend wird der Körper getrocknet und das Polyurethan bis zu einer Temperatur von 600 °C unter Inertatmosphäre ausgebrannt. Das verbleibende SiC-Pulvergerüst wird unter Argonatmosphäre bei einer Temperatur von 2100 °C gesintert. Die Probe schwindet bei der Sinterung linear 4%, so daß die Endmaße bei 39x39x24 mm liegen. Die mittlere Bruchlast bei einem Stempeleindruck vom Durchmesser 20 mm beträgt 300 N. Die Stege der Schaumkeramik enthalten etwa 10 % geschlossene Poren mit einem mittleren Durchmesser von etwa 5 µm. Nach einer Erwärmung der Keramik auf 1000°C unter Luft erfolgt eine Abschreckung in kaltem Wasser. Die danach gemessene Festigkeit beträgt noch 285 N.

### Beispiel 2

Es wird eine SiC-Suspension auf Wasserbasis hergestellt. Diese enthält eine bimodale SiC-Kornverteilung hergestellt durch Mischung von SiC-Pulvern mit mittleren Korndurchmessern von 1,8 und 54 µm im Verhältnis von 25:75 %; außerdem 0,6% Bor(carbid) und 3% Flammruß als Sinteradditiv. Die Suspension wird auf einen Feststoffgehalt von 78% eingestellt.

Zur Herstellung der Schaumkeramik wird ein Polyurethan-Schaumstoff der Zellweite von 45 ppi mit der Suspension getränkt und anschließend wird die überschüssige Suspension über ein Walzensystem abgepreßt. Für eine Probe des Durchmessers 83 cm und einer Höhe von 10 cm ergibt sich ein Beschichtungsgewicht von 38 g. Anschließend wird der Körper getrocknet und das Polyurethan bis zu einer Temperatur von 600 °C unter Inertatmosphäre ausgebrannt. Das verbleibende SiC-Pulvergerüst wird unter Argon bei einer Temperatur von 2130°C gebrannt. Die Probe schwindet bei der Sinterung linear 3%, so dass die Endmaße bei einem Durchmesser von etwa 80,5 cm und einer Höhe von 9,7 cm liegen. Die Stege der Schaumkeramik enthalten etwa 15 % geschlossene Poren mit einem mittleren Durchmesser von etwa 12 µm. Die mittlere Bruchlast bei einem Stempeleindruck vom Durchmesser 20 mm beträgt 290 N. Nach einer Erwärmung der Keramik auf 1000°C unter Luft erfolgt eine Abschrekkung in kaltem Wasser. Die danach gemessene Festigkeit beträgt noch 275 N.

### Vergleichsbeispiel:

Es wird eine keramische Suspension auf Wasserbasis hergestellt. Diese enthält SiC-Pulver mit mittlerem Korndurchmesser von 1,2 µm, 0,6% Bor(carbid) und 9% eines wasserlöslichen Phenolharzes (entspricht 3 % Kohlenstoff nach der Pyrolyse) als Sinteradditiv. Die Suspension wird auf einen Feststoffgehalt von 75% eingestellt.

Zur Herstellung der Schaumkeramik wird ein Polyurethan-Schaumstoff der Zellweite von 45 ppi mit der Suspension getränkt und anschließend wird die überschüssige Suspension über ein Walzensystem abgepreßt. Für eine Probe des Durchmessers 83 cm und einer Höhe von 10 cm ergibt sich ein Beschichtungsgewicht von 37 g. Anschließend wird der Körper getrocknet und das Polyurethan bis zu einer Temperatur von 600 °C unter Inertatmosphäre ausgebrannt. Die verbleibende SiC-Pulvergerüst wird unter Argon bei einer Temperatur von 2120°C gebrannt. Die Probe schwindet bei der Sinterung linear um 22%, und ist nach der Sinterung an der Auflageseite mit vielen makroskopischen Rissen durchsetzt. Die Stege der Schaumkeramik enthalten etwa 2 % geschlossene Poren mit einem mittleren Durchmesser < 0,5 µm. Die Festigkeit eines rißfreien Bereiches der Probe, ermittelt durch Eindruck eines Stempels mit einem Durchmesser von 20 mm, beträgt 332 N. Nach einer Erwärmung der Keramik auf 1000°C unter Luft erfolgt eine Abschreckung in kaltem Wasser. Die danach gemessene Festigkeit beträgt nur noch 170 N.

## Patentansprüche

1. Offenzellige Siliciumcarbid-Schaumkeramik bestehend aus einer dreidimensional vernetzten Keramikstruktur aus vielen miteinander verbundenen Stegen und zwischen den Stegen liegenden offenen Zellen, wobei die Stege im wesentlichen aus gesintertem Siliciumcarbid bestehen mit 5 bis 30 % Porenvolumen an ganz oder im wesentlichen ganz geschlossenen Poren mit einem mittleren Durchmesser vorn < 20 µm.

2. Offenzellige Siliciumcarbid-Schaumkeramik nach Anspruch z, bei der die Stege ein Porenvolumen von 5 -15 % an ganz oder im wesentlichen ganz geschlossene Poren aufweisen.

3. Offenzellige Siliciumcarbid-Schaumkeramik nach Anspruch 2, bei der die Stege ein Porenvolumen von 5 - 10 % an ganz oder im wesentlichen ganz geschlossenen Poren aufweisen.

4. Offenzellige Siliciumcarbid-Schaumkeramik nach Anspruch 1, bei der der mittlere Durchmesser der Poren in den Stegen 1 -10 µm ist.

5. Verfahren zur Herstellung einer offenzelligen Siliciumcarbid-Schaumkeramik nach Anspruch 1 mit 5 bis 30 % Porenvolumen an ganz oder im wesentlichen ganz geschlossenen Poren mit einem mittleren Durchmesser von < 20 µm in den Stegen, bei dem grobes und feines Siliciumcarbidpulver, wobei das grobe Siliciumcarbidpulver eine mittlere Korngröße von 5 - 100 µm und das feine Siliciumcarbidpulver eine mittlere Korngröße von < 2 µm aufweist, im Verhältnis 20 : 80 bis 80 : 20 Anteilen zusammen mit mindestens an sich bekannten geringen Mengen an Sinteradditiven gemischt und daraus eine Suspension hergestellt wird, und anschließend ein offenzelliger Schaum oder ein offenzelliges Netzwerk mit dieser Suspension ein oder mehrmals beschichtet, der Schaum oder das Netzwerk getrocknet, das Schaum- oder Netzwerkmaterial entfernt und der verbleibende Grünkörper bei Temperaturen ≥ 1800 °C unter Schutzgas oder Vakuum gesintert wird.

6. Verfahren nach Anspruch 5, bei dem grobes Siliciumcarbidpulver mit einer mittleren Korngröße von 10 - 50 µm eingesetzt wird.

7. Verfahren nach Anspruch 5, bei dem ein Verhältnis von grobem zu feinem Siliciumcarbidpulver von 40 : 60 bis 60 : 40 Anteilen eingesetzt wird.

8. Verfahren nach Anspruch 5, bei dem als Sinteradditive Bor und Kohlenstoff oder Bor, Aluminium und Kohlenstoff eingesetzt werden.

9. Verfahren nach Anspruch 5, bei dem Polyurethanschaum oder ein Netzwerk aus organischen synthetischen oder Naturfasern mit der Suspension beschichtet wird.

10. Verfahren nach Anspruch 5, bei dem das Schaum- oder Netzwerkmaterial durch Ausbrennen, Verdampfen, Ätzen, Lösen entfernt wird.

11. Verfahren nach Anspruch 5, bei dem der Grünkörper bei Temperaturen im Bereich von 1800 bis 2300 °C, vorzugsweise von 2000 bis 2150 °C, gesintert wird.

12. Verfahren nach Anspruch 5, bei dem als Suspendiermittel Wasser eingesetzt wird.

13. Verfahren nach Anspruch 5, bei dem eine Schwindung < 8 % eingestellt wird.

## Claims

1. Open-celled silicon carbide ceramic foam consisting of a three-dimensional crosslinked ceramic structure made up of many interconnected struts and open cells located between the struts, where the struts consist essentially of sintered silicon carbide having a pore volume of from 5 to 30% of completely or essentially completely closed pores having an average diameter of < 20 µm.

2. Open-celled silicon carbide ceramic foam according to Claim 1, wherein the struts have a pore volume of 5-15% of completely or essentially completely closed pores.

3. Open-celled silicon carbide ceramic foam according to Claim 2, wherein the struts have a pore volume of 5-10% of completely or essentially completely closed pores.

4. Open-celled silicon carbide ceramic foam according to Claim 1, wherein the average diameter of the pores in the struts is 1-10 µm.

5. Process for producing an open-celled silicon carbide ceramic foam according to Claim 1 having a pore volume of from 5 to 30% of completely or essentially completely closed pores having an average diameter of < 20 µm in the struts, wherein a coarse silicon carbide powder and a fine silicon carbide powder, where the coarse silicon carbide powder has an average particle size of 5-100 µm and the fine silicon carbide powder has an average particle size of < 2 µm, are mixed in a ratio of from 20:80 to 80:20 together with at least small amounts known per se of sintering additives and a suspension is produced therefrom, and an open-celled foam or an open-celled network is subsequently coated one or more times with this suspension, the foam or the network is dried, the foam or network material is removed and the green body which remains is sintered at temperatures of ≥ 1800°C under protective gas or under reduced pressure.

6. Process according to Claim 5, wherein coarse silicon carbide powder having an average particle size of 10-50 µm is used.

7. Process according to Claim 5, wherein a ratio of coarse silicon carbide powder to fine silicon carbide powder of from 40:60 to 60:40 is used.

8. Process according to Claim 5, wherein boron and carbon or boron, aluminium and carbon are used as sintering additives.

9. Process according to Claim 5, wherein polyurethane foam or a network composed of organic synthetic or natural fibres is coated with the suspension.

10. Process according to Claim 5, wherein the foam or network material is removed by burning-out, vaporization, corrosion, dissolution.

11. Process according to Claim 5, wherein the green body is sintered at temperatures in the range from 1800 to 2300°C, preferably from 2000 to 2150°C.

12. Process according to Claim 5, wherein water is used as suspension medium.

13. Process according to Claim 5, wherein a shrinkage of < 8% is set.

## Revendications

1. Mousse en céramique de carbure de silicium à pores ouverts constituée par une structure en céramique réticulée en trois dimensions de nombreuses âmes reliées les unes aux autres et de pores ouverts situés entre les âmes, les âmes étant constituées essentiellement par du carbure de silicium fritté présentant un volume de pores de 5 à 30% de pores totalement ou essentiellement totalement fermés d'un diamètre moyen < 20 µm.

2. Mousse en céramique de carbure de silicium à pores ouverts selon la revendication 1, dans laquelle les âmes présentent un volume de pores de 5-15% de pores totalement ou essentiellement totalement fermés.

3. Mousse en céramique de carbure de silicium à pores ouverts selon la revendication 2, dans laquelle les âmes présentent un volume de pores de 5-10% de pores totalement ou essentiellement totalement fermés.

4. Mousse en céramique de carbures de silicium à pores ouverts selon la revendication 1, dans laquelle le diamètre moyen des pores dans les âmes est de 1-10 µm.

5. Procédé pour la préparation d'une mousse en céramique de carbure de silicium à pores ouverts selon la revendication 1 présentant un volume de pores de 5 à 30% de pores totalement ou essentiellement totalement fermés présentant un diamètre moyen < 20 µm dans les âmes, dans lequel on mélange une poudre grossière et une poudre fine de carbure de silicium, la poudre grossière de carbure de silicium présentant une granulométrie moyenne de 5-100 µm et la poudre fine de carbure de silicium présentant une granulométrie moyenne < 2 µm, dans un rapport 20:80 à 80:20 parties, ensemble avec de faibles quantités d'additifs de frittage connus en soi et on prépare une suspension à partir de ce mélange, puis on revêt une ou plusieurs fois une mousse à pores ouverts ou un réseau à pores ouverts avec cette suspension, on sèche la mousse ou le réseau, on élimine le matériau en mousse ou en réseau et on fritte le corps cru qui reste à des températures ≥ 1800°C sous un gaz protection ou sous vide.

6. Procédé selon la revendication 5, dans lequel on utilise une poudre grossière de carbure de silicium présentant une granulométrie moyenne de 10-50 µm.

7. Procédé selon la revendication 5, dans lequel on utilise un rapport de poudre de carbure de silicium grossière à fine de 40:60 à 60:40 parties.

8. Procédé selon la revendication 5, dans lequel on utilise, comme additifs de frittage, du bore et du carbone ou du bore, de l'aluminium et du carbone.

9. Procédé selon la revendication 5, dans lequel on revêt une mousse de polyuréthane ou un réseau de fibres synthétiques organiques ou de fibres naturelles par la suspension.

10. Procédé selon la revendication 5, dans lequel le matériau en mousse ou en réseau est éliminé par combustion, évaporation, décapage, dissolution.

11. Procédé selon la revendication 5, dans lequel le corps cru est fritté à des températures dans la plage de 1800 à 2300°C, de préférence de 2000 à 2150°C.

12. Procédé selon la revendication 5, dans lequel de l'eau est utilisée comme agent de mise en suspension.

13. Procédé selon la revendication 5, dans lequel on règle un retrait < 8%.
